# EUROPÄISCHE PATENTSCHRIFT

(11) **EP 0 476 475 B1**
(45) Veröffentlichungstag und Bekanntmachung des Hinweises auf die Patenterteilung: **28.06.1995**
(21) Anmeldenummer: 91115188.4
(22) Anmeldetag: 09.09.1991
(51) Int. Cl.: C08J 11/06, B29B 17/02

(54) **Reinigung von Polycarbonat- und Polyestercarbonatabfällen**
Cleaning poly(ester)carbonate scrap
Nettoyage de déchets de poly(ester)carbonates

(30) Priorität: 21.09.1990 DE 4029886; 07.12.1990 DE 4039024
(43) Veröffentlichungstag der Anmeldung: 25.03.1992
(73) Patentinhaber: BAYER AG, 51368 Leverkusen (DE)
(72) Erfinder: Fennhoff, Gerhard, Dr., W-4156 Willich 2 (DE); Jakob, Wolfgang, Dipl.-Ing., W-4130 Moers (DE); Ehlert, Manfred, Dipl.-Ing., W-4047 Dormagen (DE); Freitag,Dieter,Dr., W-4150 Krefeld 1 (DE)

(56) Entgegenhaltungen:
- DE-A- 1 422 813
- DE-A- 3 511 711
- CHEMICAL ABSTRACTS, vol. 123, no. 26, 29. Juni 1981, Columbus, Ohio,US; abstract no. 212203J, SHIKOKU KAKEN KOGYO K.K.: 'SEPARATION OF ALUMINUMFROM ALUMINUM-CONTAINING WASTE PLASTICS' Seite 223 ;Spalte R ; & JP-B-80 048 088
- CHEMICAL ABSTRACTS, vol. 112, no. 20, 14. Mai 1990, Columbus, Ohio,US; abstract no. 180875B, RAZINSKAYA I.N. ET AL.: 'PREPARATION OF DECORATIVECOMPOSITES FROM ACRYLIC POLYMER WASTES' Seite 72 ;Spalte R ;

## Beschreibung

Audio Compact Discs werden aus aromatischen Polycarbonaten nach dem Spritzgußverfahren hergestellt. Die so erzeugten Formteile werden durch Aufdampfen von Aluminium verspiegelt und mittels vernetzender Lacke oberflächenversiegelt. Ferner werden sie mit Farbstoffen bedruckt. Zuletzt erfolgt eine Qualitätskontrolle, in der 10 Prozent bis 15 Prozent der produzierten Compact Discs aufgrund von Fehlern ausgesondert werden.

Linsen werden ähnlich wie Audio Compact Discs durch vernetzende Lacke oder auch durch Polysiloxane oberflächenversiegelt. Auch hier fallen durch die Qualitätskontrolle erhebliche Mengen Polymerabfalls an.

Lampen- oder Scheinwerferreflektoren sind Aluminiumbeschichtet. Abfälle entstehen sowohl bei der Herstellung dieser Formteile als auch nach deren Verwendung.

Diese Polycarbonatabfälle und/oder Polyestercarbonatabfälle können aufgrund ihres Aluminiumgehaltes, der Lacke und gegebenenfalls der Farbstoffe nicht durch direktes Neuverspritzen oder als Mischung mit weiteren Polymeren und/oder Polykondensaten für andere hochwertige Formteile wiederverwendet werden.

Es war deshalb Aufgabe, oben genannte Abfälle durch ein einfaches, technisch durchführbares Verfahren so aufzuarbeiten, daß die aromatischen Polycarbonate und/oder aromatischen Polyestercarbonate einer neuen Anwendung zugeführt werden können.

Gegenstand der vorliegenden Erfindung ist somit ein Verfahren zur Reinigung von Abfällen aus thermoplastischen, aromatischen Polycarbonaten und/oder thermoplastischen, aromatischen Polyestercarbonaten, die Metalle - gegebenenfalls in Form von Metallsalzen - , Lacke und gegebenenfalls Farbstoffe enthalten, das dadurch gekennzeichnet ist, daß man die Abfälle zu Bruchstücken eines mittleren Durchmessers von 0,1 cm bis 5,0 cm, bevorzugt von 0,5 cm bis 1,5 cm, zerkleinert, diese Bruchstücke danach mit Säure am Rückfluß unter Rühren erhitzt, danach mit Wasser unter Rühren neutral wäscht und schließlich mit Wasser solange nachspült, bis alle vom Polykondensat abgetrennten Lackanteile ausgespült sind, die Bruchstücke abfiltriert, trocknet und gegebenenfalls durch Windsichten die noch an den Bruchstücken anhaftenden Lack- und/oder Farbstoffreste abtrennt. Wobei die Konzentration der Säure in Wasser zwischen 1 Gewichtsprozent bis 37 Gewichtsprozenten, bezogen auf das Gesamtgewicht der Lösung aus Säure und Wasser, liegt.

Das vorliegende Verfahren ist, insbesondere dadurch gekennzeichnet, daß die Polykondensatabfälle mittels eines Shredders oder einer Mühle, wie dies in der Literatur beschrieben ist (siehe beispielsweise "Ullmanns Encyklopädie der technischen Chemie, 4. Auflage (1972), Band 2 Verfahrenstechnik I (Grundoperationen), SS 2 -34"), zerkleinert werden, mit Säure zum Rückfluß unter Rühren erhitzt werden, mit Wasser in der Weise unter gelindem Rühren neutral gewaschen verden, daß die vom Polykondensat abgetrennten, jedoch noch nicht gelösten Lackanteile aus dem Polykondensat gespült verden, das Polykondensat nach dem Abfiltrieren des Wassers in den üblichen Trockenapparaturen, wie sie beispielsweise in "Ullmanns Encyklopädie der technischen Chemie, 4. Auflage (1972), Band 2, Verfahrenstechnik I (Grundoperationen), SS 699 bis 721" beschrieben sind, getrocknet und, gegebenenfalls anschließend durch Windsichten mit Apparaten, wie sie beispielsweise in "Ullmanns Encyklopädie der technischen Chemie, 4. Auflage (1972), Band 2, Verfahrenstechnik I (Grundoperationen), SS 57 bis 69 beschrieben sind, gegebenenfalls von den noch verbliebenen Lackresten oder Farbstoffresten abgetrennt verden. In all den Fällen, in denen die Polykondensatabfälle von Natur aus keine Metalle enthalten, verden diese separat, beispielsweise als Pulver vor der Säure zugesetzt, gegebenenfalls auch in Form von Metallsalzen.

Überraschenderweise wurde nämlich gefunden, daß durch das Behandeln des Polykondensatabfalls mit Säure nach dem Auflösen des Metalls auch der größte Teil der Lacke sich von den Polycarbonaten abgetrennt und sogar zum Teil aufgelöst ist.

Ohne die Anwesenheit eines Metalls wie beispielsweise Aluminium tritt dieser Effekt nicht ein, da ohne Aluminium reaktive Spezies wie naszierender Wasserstoff und Aluminium-(III)-Salze nicht "in situ" gebildet werden können.

Gemäß DE-A-35 11 711 ist ein Verfahren zur Reinigung von Abfällen aus Polycarbonaten, die Lacke und Metalle enthalten, bekannt, wobei die Lackschichten in einem zweistufigen Methanolbad mit anschließender Wasserreinigung, und die Metallschichten in einem Ätzmittel mit anschließender Neutralisation und Wasserspülung entfernt und die von den Schichten befreiten Abfälle getrocknet werden.

Das erfindungsgemäße, einfachere Verfahren wird durch diese Lehre der DE-A-35 11 711 nicht nahegelegt, da nicht zu erwarten war, daß durch die Behandlung mit Säure auch die Lacke abgetrennt werden.

Fur den erfindungsgemäßen Reinigungsprozeß geeignete Metalle sind außer Aluminium noch Eisen, Zink und Zinn. Eisen, Zink und Zinn wirken jedoch in abgeschwächter Form im Vergleich zum Aluminium.

Lacke, die sich im Sinne der vorliegenden Erfindung vom Polymer ablösen und zum Teil auflösen lassen, sind beispielsweise solche auf Polyacrylnitril-, Polyacrylat-, Polymethacrylat-, Polyvinylchlorid-, Polysiloxan- oder Melaminharzbasis.

Für den erfindungsgemäßen Reinigungsprozeß geeignete Farbstoffe sind beispielsweise solche, auf Basis von Naphthachinonen, Benzochinonen, Anthrachinonen und Azoverbindungen, sowie organische Pigmente und anorganische Pigmente wie Eisenoxide, Chromoxide und Titandioxid.

Thermoplastische, aromatische Polycarbonate im Sinne der Erfindung sind Polycarbonate, die nach den üblichen, in der Literatur bekannten Methoden aus Diphenolen und Carbonatspendern hergestellt worden sind. (Siehe beispielsweise "H. Schnell, Chemistry and Physics of Polycarbonates, Intersciece Publishers, New York, 1964", US-Patent 3 028 365 und deutsche Offenlegungsschrift 3 832 396 (Le A 26 344).

Diphenole für solche Polycarbonate können beispielsweise
Hydrochinone,
Resorcine,
Dihydroxydiphenyle,
Bis-(hydroxyphenyl)-alkane,
Bis-(hydroxyphenyl)-cycloalkane,
Bis-(hydroxyphenyl)-sulfine,
Bis-(hydroxyphenyl)-ether,
Bis-(hydroxyphenyl)-ketone,
Bis-(hydroxyphenyl)-sulfone,
Bis-(hydroxyphenyl)-sulfoxide,
α,α'-Bis-(hydroxyphenyl)-diisopropylbenzole,
sowie von deren kernalkylierte und kernhalogenierte Verbindungen sein.

Bevorzugte Diphenole sind z.B.:
4,4'-Dihydroxydiphenyl,
2,2-Bis-(4-hydroxyphenyl)-propan,
2,4-Bis-(4-hydroxyphenyl)-2-methylbutan,
1,1-Bis-(4-hydroxyphenyl)-p-diisopropylbenzol,
2,2-Bis-(3-methyl-4-hydroxyphenyl)-propan,
2,2-Bis-(3-chlor-4-hydroxyphenyl)-propan,
Bis-(3,5-dimethyl-4-hydroxyphenyl)-methan,
2,2-Bis-(3,5-dimethyl-4-hydroxyphenyl)-propan,
Bis-(3,5-dimethyl-4-hydroxyphenyl)-sulfon,
2,4-Bis-(3,5-dimethyl-4-hydroxyphenyl)-2-methylbutan,
1,1-Bis-(3,5-dimethyl-4-hydroxyphenyl)-p-diisopropylbenzol,
2,2-Bis-(3,5-dichlor-4-hydroxyphenyl)-propan,
2,2-Bis-(3,5-dibrom-4-hydroxyphenyl)-propan und
1,1-Bis-(4-hydroxyphenyl)-3,3,5-trimethylcyclohexan.

Besonders bevorzugte Diphenole sind z.B.:
2,2-Bis-(4-hydroxyphenyl)-propan,
2,2-Bis-(3,5-dimethyl-4-hydroxyphenyl)-propan,
2,2-Bis-(3,5-dichlor-4-hydroxyphenyl)-propan,
2,2-Bis-(3,5-dibrom-4-hydroxyphenyl)-propan,
1,1-Bis-(4-hydroxyphenyl)-cyclohexans und
1,1-Bis-(4-hydroxyphenyl)-3,3,5-trimethylcyclohexan.

Es können auch beliebige Mischungen der vorgenannten Diphenole verwendet worden sein.

Die Diphenole sind entweder literaturbekannt oder nach bekannten Verfahren herstellbar.

Aromatische Polyestercarbonate im Sinne der Erfindung sind solche, die aus mindestens einem aromatischen Bisphenol, aus mindestens einer aromatischen Dicarbonsäure und aus Kohlensäure aufgebaut sind. Geeignete Diphenole sind die vorstehend aufgeführten. Geeignete aromatische Dicarbonsäuren sind beispielsweise Orthophthalsäure, Terephthalsäure, Isophtalsäure, tert.-Butylisophthalphthalsäure, 3,3'-Diphenyletherdicarbonsäure, 4,4'-Diphenyldicarbonsäure, 4,4'-Diphenyletherdicarbonsäure, 4,4'-Benzophenondicarbansäure, 3,4'-Benzophenondicarbonsäure, 4,4'-Diphenylsulfondicarbonsäure, 2,2-Bis-(4-Carboxyphenyl)-propan, Trimethyl-3-phenylindan-4,5'-dicarbonsäure.

Von den aromatischen Dicarbonsäuren werden besonders bevorzugt die Terephthalsäure und/oder Isophthalsäure eingesetzt.

Die aromatischen Polyestercarbonate können nach Verfahren hergestellt worden sein, wie sie für die Polyestercarbonatherstellung aus der Literatur bekannt sind, so z.B. nach Verfahren in homogener Lösung, nach Schmelzumesterungsverfahren, und nach dem Zweiphasengrenzflächenverfahren.

Aromatische Polycarbonate beziehungsweise aromatische Polyestercarbonate im Sinne der vorliegenden Erfindung sind solche, deren Zahlenmittel Mₙ zwischen 5000 und 15000 liegen, vorzugsweise zwischen 7000 und 13000, ermittelt durch Gelpermeationschromatographie mit Polystyrol als Eichsubstanz.

Säuren im Sinne der vorliegenden Erfindung sind wäßrige Mineralsäuren wie beispielsweise Halogenwasserstoffsäuren, wobei Halogen Chlor, Brom oder Iod sein kann, Perchlorsäure, Phosphorsäure oder Schwefelsäure. Säuren im Sinne der vorliegenden Erfindung sind auch organische Säuren wie beispielsweise Ameisensäure und Essigsäure.

Für nicht metallisierte lackierte Polykondensatabfälle geeignete Metallsalze/Säure-Kombinationen sind beispielsweise Lösungen von Aluminium-(III)-halogeniden in wäßrigen Halogenwasserstoffsäuren, wobei Halogen Chlor, Brom oder Iod sein kann, oder Halogenwasserstoffsäuren zusammen mit Aluminiumpulver.

Besonders bevorzugte Säuren sind Halogenwasserstoffsäuren und Essigsäure.

Die Konzentrationen der Säuren in Wasser liegen zwischen 1 Gewichtsprozent bis 37 Gewichtsprozenten, bevorzugt zwischen 10 Gewichtsprozenten bis 15 Gewichtsprozenten, bezogen auf das Gesamtgewicht der Lösung aus Säuren und Wasser.

Die Zeit für das Erhitzen unter Rückfluß beträgt im allgemeinen zwischen 20 Minuten und 180 Minuten. Die Trocknung der abfiltrierten Bruchstücke erfolgt bei Temperaturen von 100°C bis 120°C. Die gegebenenfalls durch Windsichten noch gereinigten Polykondensatbruchstücke sind nach den üblichen Spritzguß- oder Extrusionsverfahren wieder zu technisch brauchbaren Polycarbonatformkörpern beziehungsweise Polyestercarbonatformkörper verarbeitbar.

Sie lassen sich darüber hinaus mit anderen Kunststoffen, vorzugsweise mit Acrylnitril/Butadien/Styrol-Pfropfpolymerisaten (ABS) und/oder mit Styrol-Acrylnitril-Copolymerisaten (SAN) zu brauchbaren Mischungen verarbeiten.

### Beispiele

A. Die für die folgenden Versuche eingesetzten Compact Disc-Abfälle (Polycarbonat mit Aluminium bedampft und Lack überzogen) wurden zuvor mit Hilfe eines Shredders zu einer Teilchengröße von 1 mm bis 15 mm zerkleinert. Die so erhaltene Shredderware enthielt insgesamt 0,35 Gewichtsprozente Lack (vernetztes Polyacrylnitril und vernetztes Polyvinylchlorid) und Aluminium.

Die relative Lösungsviskosität des Polycarbonats der Shredderware nach mechanischer Abtrennung von Lacken und Aluminium (Vergleichssubstanz) (0,5 g Polycarbonat in 100 ml Dichlormethan bei 23°C) betrug 1,196.

### Beispiel 1

Zu 450 g einer 10 %ige Salzsäurelösung werden 300 g der oben genannten Compact Disc-Shredderware unter Rühren gegeben und 35 Minuten bis zum Sieden erhitzt, so daß das gesamte Aluminium und Teile der Lacke gelöst sind und die noch verbliebenen Lackreste sich vom Polycarbonat abgelöst haben. Nach dem Entfernen der Salzsäure wäscht man das Polycarbonat mit destilliertem Wasser neutral und spült dabei die zurückgebliebenen Lackreste aus. Nach dem Abfiltrieren des Polycarbonats trocknet man das Polykondensat bei 120°C und trennt letzte Lackreste durch Windsichten im Stickstoffstrom ab.

Relative Lösungsviskosität des Polycarbonats nach dem Windsichten 1,194 (0,5 g Polycarbonat in 100 ml Dichlormethan bei 23°C).

### Beispiel 2

In einem 500 l Emaillekessel mit angeflanschtem Filter und Flotationsablauf werden 100 kg des unter A. bezeichneten Polycarbonatabfalls vorgelegt. Der Kessel wird evakuiert und anschließend mit Stickstoff gespült. Der Gasaustausch wird weitere zweimal wiederhalt und schließlich mit 15 m³ Stickstoff pro Stunde beschleiert. Zum Kesselinhalt gibt man 160 kg 10prozentige Salzsäure, heitzt unter Röhren auf 90°C auf und hält 1 Stunde bei dieser Temperatur. Danach wird auf 30°C abgekühlt und die Salzsäure abgelassen. Das im Kessel verbliebene Polycarbonat wird mit dreifach entsalztem Wasser säurefrei gewaschen, wobei die vom Polycarbonat abgelösten Lackrückstände entfernt werden. Das Polycarbonat wird zuletzt bei 120°C getrocknet, auf das Windsichten wird verzichtet.

Relative Lösungsviskosität des Polycarbonats nach dem Trocknen 1,193 (0,5 g Polycarbonat in 100 ml Dichlormethan bei 23°C).
B. Die für die folgenden Versuche eingesetzten Polycarbonat-Abfälle (Polycarbonat mit Lack überzogen) wurden zuvor mit Hilfe eines Shredders zu einer Teilchengröße von 1 mm bis 15 mm zerkleinert. Die so erhaltene Shredderware enthielt insgesamt 0,5 Gewichtsprozente Lack (auf Polysiloxan- und Melaminharzbasis).

Die relative Lösungsviskosität des Polycabonats der Shredderware nach mechanischer Abtrennung der Lacke (Vergleichssubstanz) (0,5 g Polycarbonat in 100 ml Dichlormethan bei 23°C) betrug 1,279.

Auf das Windsichten wurde bei in den Beispielen 3 bis 6 verzichtet.

### Beispiel 3

Wie Beispiel 1, aber mit 300 g des unter B. angegebenen Polycarbonatabfalls und 0,5 g Aluminium.

Eine Lösung des getrockneten und gereinigten Polycarbonats (50 g Polycarbonat in 100 ml Dichlormethan) enthält noch 1/10 des Lackteils, den eine Vergleichslösung des Ausgangsmaterials (50 g Polycarbonatabfall in 100 ml Dichlormethan) aufweist.

Relative Lösungsviskosität des Polycarbonats 1,277 (0,5 g Polycarbonat in 100 ml Dichlormethan bei 23°C).

### Beispiel 4

Wie Beispiel 1, aber mit 300 g des unter B. angegebenen Polycarbonatabfalls, 450 g 10%ige salzsäurelösung und 1,5 g Aluminiumpulver.

Eine Lösung des getrockneten und gereinigten Polycarbonats (50 g Polycarbonat in 100 ml Dichlormethan) enthält noch 1/10 des Lackanteils, den eine Vergleichslösung des Ausgangsmaterials (50 g Polycarbonatabfall in 100 ml Dichlormethan) aufweist.

Relative Lösungsviskosität des Polycarbonats 1,277 (0,5 g Polycarbonat in 100 ml Dichlormethan bei 23°C).

### Beispiel 5

Wie Beispiel 1, aber mit 300 g des unter B. angegebenen Polycarbonatabfalls, 450 g 10%ige Salzsäurelösung und 7,3 g Aluminium-(III)-chlorid.

Eine Lösung des getrockneten und gereinigten Polycarbonats (50 g Polycarbonat in 100 ml Dichlormethan) enthält noch 1/5 des Lackanteils, den eine Vergleichslösung des Ausgangsmaterials (50 g Polycarbonatabfall in 100 ml Dichlormethan) aufweist.

Relative Lösungsviskosität des Polycarbonats 1,277 (0,5 g Polycarbonat in 100 ml Dichlormethan bei 23°C).

### Beispiel 6 (Vergleichsbeispiel)

Wie Beispiel 1, aber mit 300 g des unter B. angegebenen Polycarbonatabfalls, 450 g 10%ige Salzsäurelösung ohne Aluminiumpulver.

Eine Lösung des getrockneten und gereinigten Polycarbonats (50 g Polycarbonat in 100 ml Dichlormethan) enthält noch 2/3 des Lackanteils, den eine Vergleichslösung des Ausgangsmaterials (50 g Polycarbonatabfall in 100 ml Dichlormethan) aufweist.

### Beispiel 7

Wie Beispiel 1, aber mit 450 g einer 10 %igen Essigsäurelösung. Realtive Lösungsviskosität des Polycarbonats nach dem Windsichten 1,194 (0,5 g Polycarbonat in 100 ml Dichlormethan bei 23°C).

## Patentansprüche

1. Verfahren zur Reinigung von Abfällen an thermoplastischen, aromatischen Polycarbonaten und/oder thermoplastischen, aromatischen Polyestercarbonaten, die Metalle und Lacke enthalten, dadurch gekennzeichnet, daß man die Abfälle zu Bruchstücken eines mittleren Durchmessers von 0,1 cm bis 5,0 cm, zerkleinert, diese Bruchstücke danach mit Säure am Rückfluß unter Rühren erhitzt, danach mit Wasser unter Rühren solange neutral wäscht und schließlich mit Wasser solange nachspült, bis alle vom Polykondensat abgetrennten Lackanteile ausgespült sind, die Bruchstücke abfiltriert, und trocknet und gegebenenfalls durch Windsichten die noch an den Bruchstücken anhaftenden Lack- und/oder Farbstoffreste abrennt, wobei die Konzentration der Säure in Wasser zwischen 1 Gewichtsprozent bis 37 Gewichtsprozenten, bezogen auf das Gesamtgewicht der Lösung aus Säure und Wasser, liegt.

2. Verfahren gemäß Anspruch 1, dadurch gekennzeichnet, daß die Konzentration der Säure in Wasser zwischen 10 Gew.% bis 15 Gew.% liegt.

3. Verfahren gemäß Anspruch 1, dadurch gekennzeichnet, daß die Metalle in Form von Metallsalzen enthalten sind.

4. Verfahren gemäß Anspruch 1, dadurch gekennzeichnet, daß die Abfälle noch Farbstoffe enthalten.

5. Verfahren gemäß Anspruch 1, dadurch gekennzeichnet, daß man die Abfälle zu Bruchstücken eines mittleren Durchmessers von 0,5 cm bis 1,5 cm zerkleinert.

6. Verfahren gemäß Anspruch 1, dadurch gekennzeichnet, daß man durch Windsichten die noch an den Bruchstücken anhaftenden Lack- und/oder Farbstoffreste abtrennt.

## Claims

1. Process for the purification of thermoplastic, aromatic polycarbonate scrap and/or thermoplastic, aromatic polyester carbonate scrap which contain metals and coatings, characterised in that the scrap is shredded into fragments having an average diameter of from 0.1 cm to 5.0 cm, the fragments are then heated together with acid under reflux with stirring, then washed with water with stirring until neutral and finally rewashed with water until all the coating constituents separated from the polycondensate have been washed out, the fragments are removed by filtration, dried and optionally the residual coating and dyes still adhering to the fragments are separated by air elutriation, wherein the concentration of the acid in water is between 1% by weight to 37% by weight, referred to the total weight of the solution of acid and water.

2. Process according to claim 1, characterised in that the concentration of the acid in water is between 10% by weight and 15% by weight.

3. Process according to claim 1, characterised in that the metals are contained in the form of metal salts.

4. Process according to claim 1, characterised in that the scrap still contains dyes.

5. Process according to claim 1, characterised in that the scrap is shredded into fragments having an average diameter of from 0.5 cm to 1.5 cm.

6. Process according to claim 1, characterised in that the residual coating and dyes still adhering to the fragments are separated by air elutriation.

## Revendications

1. Procédé pour la purification de déchets de polycarbonates thermoplastiques, aromatiques et/ou de polyestercarbonates thermoplastiques, aromatiques, qui contiennent des métaux et des laques, caractérisé en ce qu'on fractionne les déchets en morceaux d'un diamètre moyen de 0,1 cm à 5,0 cm, qu'on chauffe ensuite ces morceaux au reflux avec de l'acide en agitant, qu'on lave ensuite avec de l'eau en agitant jusqu'à neutralité et qu'on rince ensuite ultérieurement avec de l'eau aussi longtemps que toutes les parts en laque séparées du polycondensat soient épuisées par lavage, on sépare les morceaux par filtration et on sèche et on sépare éventuellement par élutriation les restes de matière colorante et/ou de laque adhérant encore aux morceaux, la concentration de l'acide dans l'eau étant comprise entre 1 % en poids et 37 % en poids, rapportés au poids total de la solution constituée d'acide et d'eau.

2. Procédé selon la revendication 1, caractérisé en ce que la concentration de l'acide dans l'eau est comprise entre 10 % en poids et 15 % en poids.

3. Procédé selon la revendication 1, caractérisé en ce que les métaux sont contenus sous forme de sels métalliques.

4. Procédé selon la revendication 1, caractérisé en ce que les déchets contiennent encore des matières colorantes.

5. Procédé selon la revendication 1,caractérisé en ce qu'on fractionne les déchets en morceaux d'un diamètre moyen compris entre 0,5 cm et 1,5 cm.

6. Procédé selon la revendication 1, caractérisé en ce qu'on sépare par élutriation les restes de matière colorante et/ou de laque adhérant encore aux morceaux.
